# EUROPÄISCHE PATENTANMELDUNG

(11) **EP 2 954 999 A1**
(43) Veröffentlichungstag der Anmeldung: **16.12.2015**
(21) Anmeldenummer: 15171952.3
(22) Anmeldetag: 12.06.2015
(51) Int. Cl.: B29C 47/00, B29C 47/06, B65D 63/10, B29L 7/00, B29C 55/06, B29C 59/04

(54) **KUNSTSTOFF-UMREIFUNGSBAND ZUM UMSCHLINGEN VON EINEM ODER MEHREREN GEGENSTÄNDEN UND DESSEN HERSTELLUNGSVERFAHREN**

(30) Priorität: 13.06.2014 DE 102014108363
(71) Anmelder: TITAN Umreifungstechnik GmbH & Co.KG, 58332 Schwelm (DE)
(72) Erfinder: LENZEN, Peter Wilhelm, 45549 Sprockhövel (DE)
(74) Vertreter: Nunnenkamp, Jörg

(57) **Zusammenfassung**

Gegenstand der Erfindung ist ein Kunststoff-Umreifungsband (4) zum Umschlingen von einem oder mehreren Gegenständen und dessen Herstellungsverfahren. Im Rahmen der Erfindung ist das betreffende Kunststoff-Umreifungsband (4) gekennzeichnet durch einen wenigstens zweischichtigen Aufbau aus einer Kernschicht (4a) und einer diese Kernschicht (4a) an wenigstens ihren Breitseiten einhüllenden Funktionsschicht (4b).

## Beschreibung

Die Erfindung betrifft ein Kunststoff-Umreifungsband zum Umschlingen von einem oder mehreren Gegenständen.

Kunststoff-Umreifungsbänder treten heutzutage mehr und mehr in Konkurrenz zu Umreifungsbändern aus Stahl. Der Grund hierfür ist ihre einfachere Verarbeitung, der geringere Preis und die Tatsache, dass die umschlungenen bzw. der umreiften Gegenstände durch Kunststoff-Umreifungsbänder nicht oder praktisch nicht beschädigt werden. Allerdings sind Kunststoff-Umreifungsbänder hinsichtlich des einsetzbaren Temperaturbereiches gegenüber Umreifungsbändern aus Stahl benachteiligt. Aus diesem Grund hat man bereits verschiedene Ansätze verfolgt, die Temperaturstabilität von Kunststoff-Umreifungsbändern zu erhöhen. Ein vielversprechender Ansatz hierfür wird in der EP 2 658 790 B1 beschrieben, bei welcher das Kunststoff-Umreifungsband aus überwiegend Polyester und Polyolefin sowie zugesetztem Fasermaterial aufgebaut ist. Neben einer gesteigerten Temperaturstabilität wird auch ein verbessertes Relaxationsverhalten beobachtet.

Darüber hinaus werden Kunststoff-Umreifungsbänder entsprechend der Lehre nach DE 17 04 986 B2 auch mit Prägungen bzw. schmalen Riefen und dazwischen angeordneten Rippen ausgerüstet. Zuvor wird das Kunststoff-Umreifungsband gereckt und erst dann profiliert. Durch das Profilieren wird insgesamt keine Orientierung der Moleküle des Kunststoff-Umreifungsbandes in Längsrichtung oder Querrichtung vorgenommen. Gleichwohl kommt es zur Massenanhäufung in den längsverlaufenden Verdickungen. Dadurch lässt sich die Reißfestigkeit steigern, was im Endeffekt auf die Massenorientierung der Moleküle in den längsverlaufenden Verdickungen zurückgeführt wird.

Auch die EP 1 129 946 B1 befasst sich mit einem Kunststoff-Umreifungsband, dessen Oberfläche mit Prägungen ausgerüstet wird. Tatsächlich sind an dieser Stelle Längsrändelungen vorgesehen, um das bekannte Kunststoff-Umreifungsband in Längsrichtung zu versteifen. In diesem Zusammenhang werden ganz unterschiedliche Arten der Rändelung beschrieben, die auch zur Erhöhung der Biegesteifigkeit in Längsrichtung führen.

Die DE 32 06 164 A1 befasst sich nicht mit Kunststoff-Umreifungsbändern zum Umschlingen von einem oder mehreren Gegenständen. Vielmehr wird ein Verfahren zur Herstellung von Mehrschicht-Platten aus extrudierbarem Kunststoff beschrieben. Dabei kommen wenigstens zwei Extruder mit Breitschlitzdüsen zum Einsatz, mit deren Hilfe unterschiedliche Bahnen hergestellt und dann einer einzigen gemeinsamen Walzenanordnung zugeführt werden.

Der Stand der Technik hat sich grundsätzlich bewährt, was die Herstellung von Kunststoff-Umreifungsbändern angeht. Allerdings besteht nach wie vor ein Bedürfnis dahingehend, die Materialkosten zu senken. Denn als Hauptbestandteil für heute übliche Kunststoff-Umreifungsbänder wird überwiegend auf relativ kostspieliges Polyester zurückgegriffen. Zwar hat man versucht, zusätzlich Recyclingmaterial zu verarbeiten. Dessen Anteil kann jedoch nicht beliebig gesteigert werden. Zugleich besteht unverändert die Forderung, die Festigkeit der Kunststoff-Umreifungsbänder möglichst zu erhöhen und zugleich ein Aufspleißen in Längsrichtung zu vermeiden. Hier setzt die Erfindung ein.

Der Erfindung liegt das technische Problem zugrunde, ein derartiges Kunststoff-Umreifungsband so weiterzuentwickeln, dass die Herstellungskosten verringert sind, und zwar bei unveränderter oder sogar noch gesteigerter Festigkeit und insgesamt einfacherer Handhabung.

Zur Lösung dieser technischen Problemstellung ist ein gattungsgemäßes Kunststoff-Umreifungsband zum Umschlingen von einem oder mehreren Gegenständen im Rahmen der Erfindung gekennzeichnet durch einen wenigstens zweischichtigen Aufbau aus einer Kernschicht und einer diese Kernschicht an wenigstens ihren Breitseiten einhüllenden Funktionsschicht.

Die Erfindung greift also grundsätzlich auf einen wenigstens zweischichtigen oder doppelschichtigen Aufbau des Kunststoff-Umreifungsbandes zurück. Auf diese Weise können die beiden Schichten mit voneinander abweichenden Aufgaben ausgerüstet werden. Im Regelfall stellt die Kernschicht das tragende Element des Kunststoff-Umreifungsbandes dar und mag zu diesem Zweck überwiegend aus Polyester, gegebenenfalls Polyolefinen sowie weiteren Zusätzen aufgebaut sein. Beispielsweise empfiehlt es sich an dieser Stelle, mit einem Anteil von wenigstens 80 Gew.-% Polyester in der Kernschicht zu arbeiten. Darüber hinaus mag der Anteil an Polyolefinen bis zu 20 Gew.-% betragen. - Auch andere Additive können zum Einsatz kommen, und zwar regelmäßig bis zu einem Anteil bis zu 10 Gew.-%.

Bei den Additiven kann es sich grundsätzlich um anorganische oder organische Additive handeln, beispielsweise Fasermaterial, wie dies in der einleitend bereits beschriebenen EP 2 658 790 B1 behandelt wird. Auch andere Additive sind an dieser Stelle denkbar, wie bekannte Spleißhemmer auf Basis von Polystyrol, Acrylnitril-Butadien-Styrol, Methylmethacrylat-Butadien-Styrol usw.. Verwiesen wird hierzu unter anderem auf die WO 2011/160154 A1, welche geeignete Spleißhemmer aufzählt. Diese können - wie gesagt - bis zu einem Gewichtsanteil von 10 Gew.-% in der Kernschicht vorhanden sein. Demgegenüber kommt der Funktionsschicht überwiegend keine tragende Rolle bei dem erfindungsgemäßen Kunststoff-Umreifungsband in dem Sinne zu, dass die Funktionsschicht für die Festigkeit sorgt oder sorgen muss. Vielmehr dient die Funktionsschicht verschiedenen Aufgaben. So ist es beispielsweise denkbar, dass mit Hilfe der Funktionsschicht die Spleißhemmung des betreffenden Kunststoff-Umreifungsbandes in Längsrichtung erhöht wird. Dazu mögen Längsrillen und Längserhebungen in die Funktionsschicht eingebracht werden. Eine solche Prägung der Funktionsschicht führt aus den zuvor bereits geschilderten Gründen dazu, dass die Neigung des Kunststoff-Umreifungsbandes zum Aufspleißen in Längsrichtung verringert wird.

Alternativ oder zusätzlich kann die Funktionsschicht aber auch die Verarbeitung des erfindungsgemäßen Kunststoff-Umreifungsbandes verbessern und insbesondere den Verschluss ihrer Enden erleichtern. Hier ist es beispielsweise denkbar, dass die Funktionsschicht primär für die adhäsive Verbindung der Enden des erfindungsgemäßen Kunststoff-Umreifungsbandes sorgt. Im Regelfall werden diese Enden miteinander verschweißt. Die Funktionsschicht kann nun die Schweißverbindung verbessern respektive die Festigkeit der Schweißverbindung erhöhen.

Beispielsweise ist es denkbar, dass die Funktionsschicht und ein während des Schweißvorganges zugeführter Zusatz eine vergleichbare Funktion wie Füller und Härter bei einem Zweikomponentenkleber übernehmen. Das heißt, die Funktionsschicht reagiert beim Schweißvorgang mit dem Zusatz chemisch derart, dass eine besonders hohe Festigkeit der solchermaßen erzielten Klebeverbindung beobachtet wird. Das kann im Wege einer Polyaddition, Polykondensation und/oder Polymerisation erfolgen

Darüber hinaus hat es sich bewährt, wenn die Funktionsschicht regelmäßig eine geringere spezifische Dichte als die Kernschicht aufweist. Beispielsweise mag die Kernschicht über eine Dichte von meistens mehr als 1,2 g/cm³ verfügen. Demgegenüber ist die Dichte der Funktionsschicht deutlich geringer angesiedelt, kann Werte von 0,8 g/cm³ und weniger betragen. Das wird in der Praxis hauptsächlich so realisiert, dass die Funktionsschicht als Kunststoffschaum ausgelegt ist. Hierbei mag es sich um einen dauerelastischen Weichschaum handeln. Auch ein plastisch verformbarer Hartschaum ist denkbar. Als Grundmaterial für den fraglichen Schaum mag Polyurethan zum Einsatz kommen.

Trotz ihrer geringen Dichte ist die Funktionsschicht in der Lage, beispielsweise die Neigung zum Aufspleißen von Kunststoff-Umreifungsbändern aus überwiegend Polyester zu verringern. Hierzu kann die Funktionsschicht die Kernschicht vollständig umhüllen und in ihrem Innern aufnehmen. Die Kernschicht ist dabei insgesamt so ausgelegt, dass sie primär für die Festigkeit des erfindungsgemäßen Kunststoff-Umreifungsbandes verantwortlich zeichnet. Die Funktionsschicht mag demgegenüber geprägt werden, so dass infolge dieser Prägung eine etwaige Spleißneigung der Kernschicht verringert wird, wenn nicht sogar gänzlich ausgeschlossen werden kann. Das alles gelingt bei im Vergleich zum Stand der Technik, beispielsweise nach der DE 17 04 986 B2, mit deutlich verringertem Materialverbrauch, weil die Prägung ausschließlich in die Funktionsschicht eingebracht wird, welche ihrerseits meistens als Kunststoffschaumschicht ausgebildet ist. Demgegenüber wird die Kernschicht nicht mit einer Prägung ausgerüstet und braucht auch nicht mit einer solchen Prägung ausgerüstet zu werden.

Das heißt, die Kernschicht ist überwiegend formstabil bei der Herstellung und Verarbeitung des erfindungsgemäßen Kunststoff-Umreifungsbandes ausgebildet. Demgegenüber wird die Funktionsschicht zumindest bei der Verarbeitung des Kunststoff-Umreifungsbandes in ihrer Form verändert. Im Regelfall geht man hierbei so vor, dass die Kernschicht und die Funktionsschicht gemeinsam hergestellt werden, beispielsweise im Sinne der Ko-Extrusion.

Anschließend wird das solchermaßen produzierte Kunststoff-Umreifungsband im Regelfall gestreckt. Hierbei werden Streckgrade von typischerweise 1 : 2 bis 1 : 5 beobachtet. Nach dem Strecken wird das Kunststoff-Umreifungsband entsprechend der Erfindung im Regelfall geprägt. Dieser Prägevorgang sorgt dafür, dass das erfindungsgemäße Kunststoff-Umreifungsband mit Riefen und Rippen überwiegend in Längsrichtung ausgerüstet wird, um ein Aufspleißen in eben dieser Längsrichtung zu verhindern. Die Riefen und Rippen werden dabei ausschließlich in die die Kernschicht vollständig umhüllende Funktionsschicht eingebracht. Das ist unschwer möglich, weil die Funktionsschicht typischerweise als Kunststoffschaumschicht ausgebildet ist. Demgegenüber bleibt die Kernschicht überwiegend formstabil.

Alternativ zur Ko-Extrusion von Funktionsschicht und Kernschicht kann grundsätzlich auch so vorgegangen werden, dass zunächst die Kernschicht extrudiert und dann mit der Funktionsschicht umhüllt wird. Dazu ist es beispielsweise denkbar, dass die Kernschicht durch ein Tauchbad hindurchgeführt wird, in welchem die Funktionsschicht als Schmelze vorliegt und sich um die Kernschicht herum an diese anlegt. Im Regelfall werden jedoch die Kernschicht und die Funktionsschicht gemeinsam co-extrudiert. Dazu mag ein entsprechend ausgelegter Extruderkopf mit Doppeldüse realisiert werden.

Alternativ oder zusätzlich zur bereits beschriebenen spleißhemmenden Wirkung der Funktionsschicht durch die eingebrachten Riefen und Rippen kann die Funktionsschicht aber auch chemisch/physikalisch reaktiv ausgebildet werden. Eine chemisch reaktive Auslegung der Funktionsschicht ist zuvor bereits beschrieben worden. In diesem Fall mag die Funktionsschicht beispielsweise beim schweißenden Verbinden der Enden des erfindungsgemäßen Kunststoff-Umreifungsbandes mit Hilfe eines Zusatzes aktiviert werden. Tatsächlich reagieren die Funktionsschicht und der Zusatz in diesem Fall derart, dass eine chemische Reaktion wie eine Polyaddition, Polykondensation oder auch Polymerisation stattfindet. Als Folge hiervon wird die Festigkeit der hergestellten Verbindung zwischen den beiden Enden des Kunststoff-Umreifungsbandes gegenüber bisherigen Vorgehensweisen deutlich gesteigert.

Tatsächlich kann die Funktionsschicht mit dem Zusatz ähnlich wie Harz und Härter bei einem Zweikomponentenklebstoff bereits bei Raumtemperatur aushärten. Im Regelfall wird man hier jedoch mit erhöhten Temperaturen arbeiten, die in Verbindung mit dem Kunststoffschweißen eingestellt werden. Tatsächlich haben sich hier Temperaturen von typischerweise 100 C° bis 200 C° als günstig erwiesen. Grundsätzlich kann zur Herstellung der Klebeverbindung unter Rückgriff auf die Funktionsschicht aber auch ohne zusätzliches Erhitzen gearbeitet werden, einfach indem der Zusatz an die Verbindungsstelle herangeführt und die beschriebene Reaktion gestartet wird.

Eine alternativ ebenso mögliche physikalische Reaktion der Funktionsschicht ist derart denkbar und wird von der Erfindung umfasst, dass beispielsweise die Funktionsschicht durch das bereits angesprochene Prägen eine plastische Verformung erfährt. Zu diesem Zweck mag es sich bei der Funktionsschicht um einen plastisch verformbaren Hartschaum handeln. Dieser Hartschaum wird mit Hilfe von Prägewalzen so verformt, dass die zuvor bereits beschriebenen Riefen und Rippen in der Funktionsschicht entstehen und ein etwaiges Aufspleißen des erfindungsgemäßen Kunststoff-Umreifungsbandes in Längsrichtung verhindern.

Wie bereits erläutert, kann die Funktionsschicht mit Hilfe eines Aktivierungsmittels bzw. eines Zusatzes aktiviert werden. Die Funktionsschicht und das Aktivierungsmittel bzw. der Zusatz übernehmen dabei eine vergleichbare Funktion wie Harz und Härter bei einem Zweikomponentenklebstoff.

In diesem Zusammenhang besteht die weitere Möglichkeit, dass die Funktionsschicht lediglich punktuell oder bereichsweise aktiviert wird. Tatsächlich empfiehlt die Erfindung, dass die Funktionsschicht an zumindest miteinander zu verbindenden Enden aktiviert wird. Auf diese Weise werden die beiden zu verbindenden Enden besonders fest miteinander gekoppelt. - Gegenstand der Erfindung ist auch ein Verfahren zur Herstellung eines solchen Kunststoff-Umreifungsbandes, wie es im Anspruch 9 beschrieben wird. Entsprechend den Maßnahmen im Anspruch 10 wird die Funktionsschicht nach dem Austritt aus den beiden Düsenköpfen und der dadurch realisierten Ko-Extrusion mechanisch bearbeitet und/oder chemisch verändert.

Im Ergebnis werden ein Kunststoff-Umreifungsband und ein zugehöriges Herstellungsverfahren beschrieben, welches zunächst einmal mit besonderen Kostenvorteilen ausgerüstet ist. Das lässt sich im Kern darauf zurückführen, dass der Materialverbrauch insbesondere an kostspieligem Polyester gegenüber bisherigen Vorgehensweisen deutlich verringert werden kann. Tatsächlich besteht bei dem erfindungsgemäßen Kunststoff-Umreifungsband lediglich die Kernschicht überwiegend aus Polyester, beispielsweise in einem Gewichtsanteil von bis zu 80 Gew.-%. Demgegenüber ist die die Kernschicht ganz oder teilweise umhüllende Funktionsschicht aus einem preisgünstigen Kunststoff wie beispielsweise Polyurethan gefertigt. Da an dieser Stelle darüber hinaus und vorteilhaft auf einen Kunststoffschaum zurückgegriffen wird, werden weitere Vorteile beobachtet, beispielsweise im Hinblick auf das Gewicht des solchermaßen realisierten Kunststoff-Umreifungsbandes.

Denn die Kunststoffschaumschicht bzw. Funktionsschicht verfügt typischerweise über eine Dichte, die deutlich unterhalb von 0,8 g/cm³ angesiedelt ist. Das heißt, die Funktionsschicht substituiert teilweise Polyester bzw. Polyolefin mit einer Dichte von mehr als 1,2 g/cm³, weshalb sich die Gewichtsersparnis erklärt.

Hinzu kommt, dass die Funktionsschicht die Spleißneigung des Kunststoff-Umreifungsbandes und insbesondere die Spleißneigung der Kernschicht unterdrückt respektive dieser entgegenwirkt. Zu diesem Zweck wird die Funktionsschicht mit in Längsrichtung verlaufenden Riefen und Rippen ausgerüstet. Diese können unschwer in die Funktionsschicht eingebracht werden, weil es sich hierbei vorteilhaft um einen plastisch verformbaren Hartschaum aus beispielsweise Polyurethan handelt. Des Weiteren kann die Funktionsschicht eine besonders feste Verbindung der Enden des Kunststoff-Umreifungsbandes ermöglichen. Zu diesem Zweck wird der Funktionsschicht ein Aktivierungsmittel zugeführt, und zwar vorteilhaft im Bereich der miteinander zu verbindenden Enden. Als Folge hiervon kommt es zu einer chemischen Reaktion zwischen der Funktionsschicht und dem Aktivierungsmittel bzw. Zusatz ähnlich einem Zweikomponentenklebstoff.

Das alles lässt sich bereits so einrichten, dass die Aushärtereaktion bereits bei Raumtemperatur gestartet wird. Im Regelfall wird der solchermaßen realisierte Verbindungsvorgang der Enden durch eine zusätzliche Kunststoffschweißung unterstützt. Das ist allerdings nicht zwingend.

Folgerichtig wird ein Kunststoff-Umreifungsband zur Verfügung gestellt, welches kostengünstiger als bisher beobachtete Kunststoff-Umreifungsbänder produziert werden kann, nämlich durch den realisierten zweischichtigen Aufbau. Trotz dieser besonders kostengünstigen Auslegung werden vergleichbare Festigkeiten wie bei herkömmlichen Kunststoff-Umreifungsbändern beobachtet. Das alles gelingt mit zugleich reduziertem Gewicht und der zusätzlichen Möglichkeit, die Festigkeit der Verbindungsstelle der beiden Enden beim Umschlingen von Gegenständen gegenüber bisherigen Vorgehensweisen deutlich zu steigern. Denn bei den an dieser Stelle typischerweise im Stand der Technik eingesetzten Reibschweißungen kommt es manchmal zu Strukturänderungen im Kunststoff im Bereich der zu verbindenden Enden, die erfindungsgemäß schon deshalb vermieden werden, weil die Verbindung primär durch die Reaktion der Funktionsschicht mit dem Aktivierungsmittel hergestellt wird. Hierin sind die wesentlichen Vorteile zu sehen.

Im Folgenden wird die Erfindung anhand einer lediglich ein Ausführungsbeispiel darstellenden Zeichnung näher erläutert; es zeigen:
- **Fig. 1**: eine Anlage zur Herstellung des erfindungsgemäßen Kunststoff-Umreifungsbandes und
- **Fig. 2**: das erfindungsgemäße Kunststoff-Umreifungsband im Schnitt.

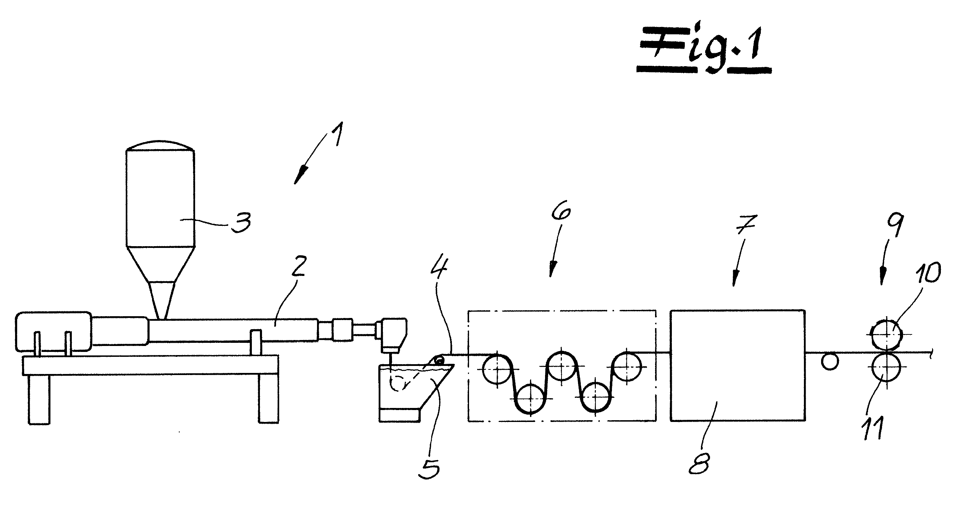

In der Fig. 1 ist eine Extrusionsvorrichtung 1 dargestellt, die mit einer Extruderschnecke 2 und einem Extruderbehälter 3 ausgerüstet ist. Im Extruderbehälter 3 werden die Rohstoffe zur Herstellung des Kunststoff-Umreifungsbandes 4 ausgangsseitig der Extruderschnecke 2 bevorratet und der Extruderschnecke 2 zugeführt. Der Extruderbehälter 3 enthält folglich das Extrudat.

Nach der Extrusion des Kunststoff-Umreifungsbandes 4 ausgangsseitig der Extruderschnecke 2 durchläuft dieses zunächst ein Wasserbad 5. Im Anschluss an das Wasserbad 5 sind eine erste Streckeinrichtung 6 und eine zweite Streckeinrichtung 7 vorgesehen. Die zweite Streckeinrichtung 7 ist darüber hinaus mit einem Ofen 8 ausgerüstet, durch welchen das Kunststoff-Umreifungsband 4 beim zweiten Streckvorgang hindurchgeführt wird. Für die Verstreckung gilt, dass das die Extruderschnecke verlassende Kunststoff-Umreifungsband 4 insgesamt unter Berücksichtigung eines Streckgrades von 1 : 2 bis 1 : 5 gestreckt wird. Das heißt, das die Extruderschnecke 2 verlassende Kunststoff-Umreifungsband 4 wird auf die doppelte bis zur fünffachen Länge in der ersten bzw. zweiten Streckeinrichtung 6, 7 verstreckt.

Der Ofen 8 bei der zweiten Streckeinrichtung 7 sorgt dafür, dass die beim Strecken erreichte molekulare Orientierung der Polymerketten im Material unverändert bleibt. Im Anschluss an die beiden Streckvorrichtungen 6, 7 wird dann das Kunststoff-Umreifungsband 4 noch geprägt. Hierzu ist eine Prägevorrichtung 9 vorgesehen, die mit einer Prägewalze 10 und einer mit der Prägewalze 10 wechselwirkenden Gegenwalze bzw. Gegendruckwalze 11 ausgerüstet ist.

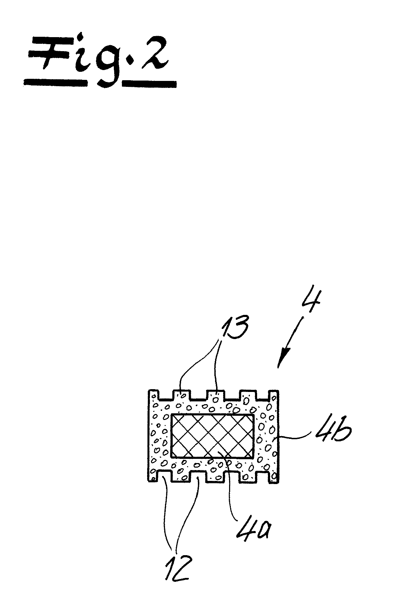

Das Kunststoff-Umreifungsband 4 setzt sich ausweislich der Schnittdarstellung in Fig. 2 aus zwei Schichten zusammen. Das heißt, das Kunststoff-Umreifungsband 4 ist durch einen zweischichtigen Aufbau aus einer Kernschicht 4a und einer die Kernschicht 4a an wenigstens ihren Breitseiten einhüllenden Funktionsschicht 4b gekennzeichnet. Im Ausführungsbeispiel erkennt man anhand der Fig. 2, dass die Funktionsschicht 4b die Kernschicht 4a vollständig umhüllt und ihrem Innern aufnimmt.

Die Kernschicht 4a und die Funktionsschicht 4b werden in der Extrusionsvorrichtung 2 bzw. der dortigen Extruderschnecke 2 gemeinsam hergestellt, folglich ko-extrudiert. Zu diesem Zweck verfügt die Extrusionsvorrichtung bzw. Extruderschnecke 2 ausgangsseitig über eine entsprechend gestaltete Doppeldüse, welche im Zentrum eine Düse für die Kernschicht 4a und das Zentrum umrahmend eine weitere Düse für die Funktionsschicht 4b aufweist. Die Kernschicht 4a mag aus bis zu 80 Gew.-% Polyester und bis zu 20 Gew.-% Polyolefinen hergestellt sein. Es ist aber auch möglich, dass bis zu 90 Gew.-% Polyester und bis zu 10 Gew.-% Polyolefine oder auch noch andere Zusammensetzungen an dieser Stelle zum Einsatz kommen. Demgegenüber ist die Funktionsschicht 4b im Ausführungsbeispiel aus Polyurethan hergestellt. Tatsächlich kommt an dieser Stelle ein Polyurethanschaum oder allgemein ein Kunststoffschaum zum Einsatz. Dabei hat sich ein plastisch verformbarer Hartschaum als besonders günstig erwiesen.

Der Kunststoffschaum bzw. Polyurethanschaum zur Herstellung der Funktionsschicht 4b mag in der Weise produziert werden, dass entsprechende chemische Aufschäummittel in den Extruderbehälter 3 zur Herstellung der Funktionsschicht 4b eingefüllt werden. Dadurch kommt es bei der zur Extrusion nötigen Temperatur in der Extruderschnecke 2 zum Aufschäumen dieser chemischen Schäumungsmittel und dazu, dass die Breitschlitzdüse zur Realisierung der Funktionsschicht 4b insgesamt die Kunststoffschaumschicht bzw. den Polyurethanschaum ausgibt.

Anstelle der beschriebenen Ko-Extrusion von einerseits der Kernschicht 4a und andererseits der Funktionsschicht 4b ist es aber auch möglich, dass die Funktionsschicht 4b mit Hilfe eines Tauchbades die Kernschicht 4a umhüllt. Dann mag beispielsweise anstelle des Wasserbades 5 ein entsprechend gestaltetes Tauchbad realisiert sein, durch welches die Kernschicht 4a hindurchgeführt wird. Nach Verlassen des Tauchbades umhüllt die Funktionsschicht 4b die Kernschicht 4a wie beschrieben.

Beim abschließenden Prägen in der Prägevorrichtung 9 behält die Kernschicht 4a überwiegend ihre Form bei. Das heißt, die Kernschicht 4a ist überwiegend formstabil ausgelegt. Demgegenüber ist die Funktionsschicht 4b zumindest bei der Verarbeitung formveränderbar ausgebildet. Das heißt, mit Hilfe der Prägevorrichtung 9 werden in die Funktionsschicht 4b Riefen 12 und Rippen 13 eingebracht, wie dies in der Schnittdarstellung nach der Fig. 2 dargestellt ist. Tatsächlich mag die Verteilung der Riefen 12 und Rippen 13 spiegelsymmetrisch und meistens auch gleichmäßig im Vergleich zu einer das Kunststoffband 4 im Querschnitt horizontal teilenden Spiegelebene ausgebildet sein. Außerdem wird man die Auslegung meistens so treffen, dass die Riefen 12 und Rippen 13 an den jeweils Breitseiten des Kunststoff-Umreifungsbandes 4 vorgesehen sind. Dadurch wird ein etwaiges Aufspleißen in Längsrichtung des Kunststoff-Umreifungsbandes 4 vermieden.

Die Funktionsschicht 4b kann darüber hinaus chemisch reaktiv ausgebildet sein. Dazu mag der Funktionsschicht 4b ein Aktivierungsmittel zugeführt werden, und zwar im Bereich einer im Ausführungsbeispiel nicht dargestellten Verschlussvorrichtung. Bei dieser Verschlussvorrichtung mag es sich um eine handgeführte Maschine oder einen Bestandteil einer Umreifungsvorrichtung handeln. Jedenfalls wird das Aktivierungsmittel regelmäßig in der Verschlussvorrichtung zugeführt, welche die beiden Enden des Kunststoff-Umreifungsbandes 4 nach dem Umschlingen der Gegenstände zusammenführt und miteinander koppelt. Das heißt, die Funktionsschicht 4b wird an zumindest miteinander verbundenen Enden des Kunststoff-Umreifungsbandes 4 aktiviert.

## Patentansprüche

1. Kunststoff-Umreifungsband (4) zum Umschlingen von einem oder mehreren Gegenständen, **gekennzeichnet durch** einen wenigstens zweischichtigen Aufbau aus einer Kernschicht (4a) und einer diese Kernschicht (4a) an wenigstens ihren Breitseiten einhüllenden Funktionsschicht (4b).

2. Kunststoff-Umreifungsband (4) nach Anspruch 1, **dadurch gekennzeichnet, dass** die Funktionsschicht (4b) die Kernschicht (4a) vollständig umhüllt und in ihrem Innern aufnimmt.

3. Kunststoff-Umreifungsband (4) nach Anspruch 1 oder 2, **dadurch gekennzeichnet, dass** die Kernschicht (4a) überwiegend formstabil bei der Herstellung und Verarbeitung ausgebildet ist.

4. Kunststoff-Umreifungsband (4) nach einem der Ansprüche 1 bis 3, **dadurch gekennzeichnet, dass** die Funktionsschicht (4b) zumindest bei der Verarbeitung formveränderbar ausgebildet ist.

5. Kunststoff-Umreifungsband (4) nach einem der Ansprüche 1 bis 4, **dadurch gekennzeichnet, dass** die Funktionsschicht (4b) chemisch/physikalisch reaktiv ausgebildet ist.

6. Kunststoff-Umreifungsband (4) nach Anspruch 5, **dadurch gekennzeichnet, dass** zur Aktivierung der Funktionsschicht (4b) ein Aktivierungsmittel zugeführt wird.

7. Kunststoff-Umreifungsband (4) nach einem der Ansprüche 1 bis 6, **dadurch gekennzeichnet, dass** die Funktionsschicht (4b) geprägt ist.

8. Kunststoff-Umreifungsband (4) nach einem der Ansprüche 1 bis 7, **dadurch gekennzeichnet, dass** die Funktionsschicht (4b) an zumindest miteinander verbundenden Enden aktiviert ist.

9. Verfahren zum Herstellen eines Kunststoff-Umreifungsbandes (4) zum Umschlingen von einem oder mehreren Gegenständen nach einem der Ansprüche 1 bis 8, wonach mittels einer Extrusionsvorrichtung mit wenigstens zwei Düsenköpfen die Kernschicht (4a) und die Funktionsschicht (4b) co-extrudiert werden.

10. Verfahren nach Anspruch 9, **dadurch gekennzeichnet, dass** nach dem Austritt aus den Düsenköpfen die Funktionsschicht (4b) mechanisch bearbeitet und/oder chemisch verändert wird.
